# EUROPÄISCHE PATENTSCHRIFT

(11) **EP 3 731 042 B1**
(45) Veröffentlichungstag und Bekanntmachung des Hinweises auf die Patenterteilung: **08.06.2022**
(21) Anmeldenummer: 20157305.2
(22) Anmeldetag: 14.02.2020
(51) Int. Cl.: G05B 17/02, G05B 15/02, H05K 7/14

(54) **ELEKTRISCHES/ELEKTRONISCHES INSTALLATIONSSYSTEM**
ELECTRIC/ELECTRONIC INSTALLATION SYSTEM
SYSTÈME D'INSTALLATION ÉLECTRIQUE/ÉLECTRONIQUE

(30) Priorität: 25.04.2019 DE 102019110653
(43) Veröffentlichungstag der Anmeldung: 28.10.2020
(73) Patentinhaber: Insta GmbH, 58509 Lüdenscheid (DE)
(72) Erfinder: Winkel, Nicolas, 58509 Lüdenscheid (DE); Schigelski, Gordian, 58509 Lüdenscheid (DE)

(56) Entgegenhaltungen:
- EP-A2- 1 331 533
- US-A1- 2016 146 494
- N N: "GIRA Schaltaktor 8fach/Jalousieaktor 4fach 16A Gebrauchsanweisung", , 1. Januar 2007 (2007-01-01), Seiten 1-9, XP055726584, Gefunden im Internet: URL:https://descargas.futurasmus-knxgroup. org/DOC/DE/Gira/5293/10371110.pdf [gefunden am 2020-09-01]
- Anonymous: "KNX-Standard - Wikipedia", , 21. April 2019 (2019-04-21), XP055726589, Gefunden im Internet: URL:https://de.wikipedia.org/w/index.php?t itle=KNX-Standard&oldid=187771000 [gefunden am 2020-09-01]

## Beschreibung

Die vorliegende Erfindung geht von einem gemäß Oberbegriff des Hauptanspruches konzipierten elektrischen/elektronischen Installationssystem für Gebäude aus.

Die Aktoren derartiger elektrischer/elektronischer Installationssysteme sind in der Regel dafür vorgesehen, über ihre Lastausgänge auf besonders komfortable Art und Weise eine Vielzahl von in Gebäuden installierte Lasten, wie Jalousieantriebe, Beleuchtungseinrichtungen, Heizung, Lüftung und so weiter bedarfsgerecht zu beeinflussen. Zu diesem Zweck sind bei solchen elektrischen/elektronischen Installationssystemen Aktoren mit verschiedenen Funktionalitäten bekannt geworden, die vorzugsweise als Reiheneinbaugeräte ausgeführt und zur Installation in Schaltschränken vorgesehen sind. In der Regel sind solche elektrische/elektronische Aktoren zum Anschluss an ein Bussystem vorgesehen.

Durch die DE 10 2012 107 216 B4 ist ein solcher Aktor für derartige elektrische/elektronischen Installationssysteme bekannt geworden. Dieser Aktor ist für den Anschluss an ein Bussystem eines Gebäudes vorgesehen und weist zur Beeinflussung von angeschlossenen beziehungsweise zugeordneten Lasten mehrere Lastausgänge auf. Zur manuellen Beeinflussung von zugehörigen Lasten sind mehrere Betätigungselemente vorhanden, wobei zudem ein zweites Betätigungselement vorgesehen ist, welches zur Programmierung dient. Zudem sind mehrere Anzeigeelemente vorhanden. Oftmals weisen derartige elektrische/elektronische Installationssystemen eine Vielzahl solcher Aktoren auf, welche als Reiheneinbaugeräte ausgeführt und gemeinsam in einem Schaltschrank untergebracht sind. Die Aktivierung der manuellen Beeinflussungsmöglichkeit (Handbedienung) derartiger Aktoren erfolgt dadurch, dass an jedem Aktor durch separate Betätigung des entsprechenden Betätigungselementes die manuelle Beeinflussungsmöglichkeit eingeschaltet wird. Die Deaktivierung der manuellen Beeinflussungsmöglichkeit der Aktoren erfolgt ebenfalls dadurch, dass an jedem Aktor durch separate Betätigung des entsprechenden Betätigungselementes die manuelle Beeinflussungsmöglichkeit Handbedienung ausgeschaltet wird. Eine derartige Aktivierung beziehungsweise Deaktivierung der manuellen Beeinflussungsmöglichkeit (Handbedienung) gestaltet sich für den Anwender/Installateur somit entsprechend umständlich und zeitaufwendig.

Aus EP 1 331 533 A2 ist ein Verfahren zum Zuordnen von Betriebsadressen in einem Steuersystem für eine Vielzahl von Aktoren bekannt, welches darauf gerichtet ist, das Auffinden eines sich identifizierenden Aktors zu vereinfachen. Bei dem dieses Verfahren durchführenden Steuersystem handelt es sich jedoch nicht um Aktoren, die in einem Reiheneinbaugerät, in dem die Aktoren lokal in einem Schaltschrank angeordnet sind, zum Einsatz kommen, sondern um ein Steuersystem, bei dem die Aktoren weit voneinander entfernt sind. Auch erfolgt jegliche Kommunikation über einen zentralen Befehlsgeber und nicht direkt zwischen den Aktoren.

Die Gebrauchsanweisung "GIRA Schaltaktor 8 fach/Jalousieaktor 4fach 16 A" (https://descargas.futurasmus-knxgroup.org/DOC/DE/gira/5293/10371110.pdf) beschreibt einen Aktor, der durchaus ausgeführt als Reiheneinbaugerät zum Einsatz kommt. Jedoch wird lediglich ein mehrere Ausgänge aufweisender Aktor beschrieben; also keine Kommunikation zwischen unterschiedlichen Aktoren.

Ausgehend von derart ausgeführten elektrischen/elektronischen Installationssystemen liegt der vorliegenden Erfindung die Aufgabe zugrunde, ein Installationssystem zu schaffen, bei welchem die Aktivierung und/oder Deaktivierung der manuellen Beeinflussungsmöglichkeit (Handbedienung) aller Aktoren des elektrischen/elektronischen Installationssystems durch eine einzige manuelle Betätigung eines einzigen ersten Betätigungselementes eines beliebigen Aktors erfolgt. In Abhängigkeit der ausgewählten manuellen Beeinflussungsmöglichkeit (Handbedienung) kann nach dem Verstreichen eines bestimmten Zeitraumes auch eine automatische Deaktivierung der manuellen Beeinflussungsmöglichkeit (Handbedienung) vorgesehen sein.

Erfindungsgemäß wird diese Aufgabe durch die im Hauptanspruch angegebenen Merkmale gelöst.

Bei einer solchen Ausbildung ist besonders vorteilhaft, dass für den Anwender/Installateur auf einfache Art und Weise ein besonders schneller Zugriff auf die manuelle Beeinflussungsmöglichkeit (Handbedienung) aller Aktoren des elektrischen/elektronischen Installationssystems sichergestellt ist. Zudem ist besonders vorteilhaft, wenn die manuelle Beeinflussungsmöglichkeit (Handbedienung) aller Aktoren des elektrischen/elektronischen Installationssystems nicht nur in einem permanenten Handbedienmodus erfolgt, sondern zudem durch entsprechende Betätigung zumindest eines ersten Betätigungselementes an einem beliebigen Aktor auch in einem Gruppenhandbedienmodus oder in einem temporären Handbedienmodus erfolgen kann. Dem Anwender/Installateur stehen somit vorteilhafterweise mehrere Möglichkeiten zur Handbedienung aller Aktoren des elektrischen/elektronischen Installationssystems zur Verfügung.

Weitere vorteilhafte Ausgestaltungen des erfindungsgemäßen Gegenstandes sind in den Unteransprüchen angegeben. Anhand eines Ausführungsbeispieles sei die Erfindung im Prinzip näher erläutert, dabei zeigt:

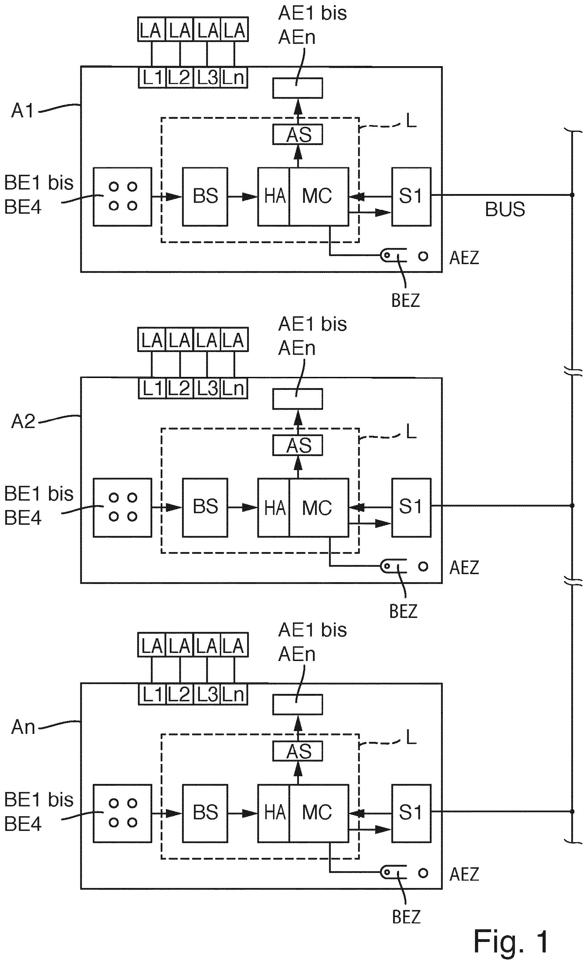

- Fig. 1:: prinziphaft ein mehrere Aktoren umfassendes elektrisches/elektronisches Installationssystem, als Blockschaltbild;

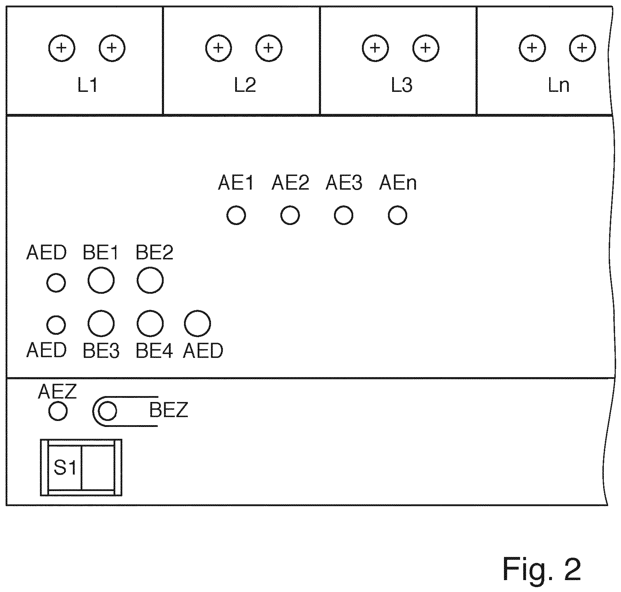

- Fig. 2:: prinziphaft einen Aktor eines solchen elektrischen/elektronischen Installationssystems mit vier Lastausgängen beziehungsweise Kanälen, in der Draufsicht.

Wie aus den Figuren hervorgeht, weist das für den Einsatz in Gebäuden vorgesehene elektrische/elektronische Installationssystem eine Vielzahl von jeweils als Reiheneinbaugerät ausgeführten Aktoren A1 bis An auf, welche über ein Bussystem BUS miteinander in Verbindung stehen. Jeder der Aktoren A1 bis An weist mehrere (vier) Lastausgänge L1 bis Ln beziehungsweise Kanäle auf, die zur Beeinflussung von angeschlossenen (zugeordneten) Lasten LA vorgesehen sind.

Beim vorliegenden Ausführungsbeispiel ist jedem Lastausgang L1 bis Ln ein Anzeigeelement AE1 bis AEn zugeordnet. Bei entsprechenden Anforderungen besteht jedoch durchaus die Möglichkeit, jedem Lastausgang L1 bis Ln auch mehrere Anzeigeelemente zuzuordnen. Die Aktoren A1 bis An weisen jeweils mehrere erste Betätigungselemente BE1 bis BE4 auf, die zur bedarfsweisen, manuellen Beeinflussung der angeschlossenen (zugeordneten) Lasten LA vorgesehen sind. Es ist zumindest ein zweites Betätigungselement BEZ vorgesehen, welches zur Programmierung dient. Ausgelöst durch einen Betätigungsvorgang an zumindest einem der ersten Betätigungselemente BE1 bis BE4 wird über die Logikeinheit L eines jeden Aktors A1 bis An die manuelle Beeinflussungsmöglichkeit (Handbedienung) des betreffenden Aktors A1 bis An aktiviert. Zum Zweck der gleichzeitigen Aktivierung der manuellen Beeinflussungsmöglichkeit (Handbedienung) an mehreren Aktoren A1 bis An steht die Logikeinheit L eines jeden Aktors A1 bis An datentechnisch über das Bussystem BUS miteinander in Verbindung, und weist die Logikeinheit L eines jeden Aktors A1 bis An je eine Betätigungselementeauswertestufe BS und je eine Handbedienaktivierungsstufe HA auf.

Beim vorliegenden Ausführungsbeispiel ist vorgesehen, dass demjenigen Aktor A1 bis An, an dem die Aktivierung der manuellen Beeinflussungsmöglichkeit (Handbedienung) durch den Anwender/Installateur erfolgte, über die Logikeinheit L die übrigen Aktoren A1 bis An in einer logischen Reihenfolge zugeordnet werden. Der Anwender/Installateur erhält eine entsprechende Rückmeldung hinsichtlich der Aktivierung, weil zumindest an diesem Aktor A1 bis An durch Ansteuerung zumindest eines Anzeigeelementes AE1 bis AEn und/oder eines dritten Anzeigeelementes AED eine optische Signalisierung erfolgt, um deutlich anzuzeigen, dass die manuelle Beeinflussungsmöglichkeit (Handbedienung) aktiviert ist. Die Aktivierung der manuellen Beeinflussungsmöglichkeit (Handbedienung) erfolgt zum Beispiel dadurch, dass am ersten Betätigungselement BE1 ein Betätigungsvorgang erfolgt, welcher eine Betätigungsdauer von zum Beispiel fünf Sekunden aufweist und von der Betätigungselementeauswertestufe BS als ein die manuelle Beeinflussungsmöglichkeit (Handbedienung) aktivierender Vorgang gewertet wird. Die optische Anzeige, dass nun die manuelle Beeinflussungsmöglichkeit (Handbedienung) aktiviert ist, wird zum Beispiel durch die Ansteuerung des Anzeigeelementes AE1 vorgenommen, wobei dieses Anzeigeelement AE1 zu diesem Zweck durch die Anzeigeelementeaktivierungsstufe AS angesteuert wird. Beim vorliegenden Ausführungsbeispiel wird derjenige Aktor A1 bis An, an dem die Aktivierung der manuellen Beeinflussungsmöglichkeit (Handbedienung) erfolgte, mittels einer Auswahlmarkierung (Token) gekennzeichnet. Zudem werden diesem Aktor A1 bis An über seine Logikeinheit L die übrigen Aktoren A1 bis An in einer logischen Reihenfolge mittels Durchnummerierung zugeordnet.

Es sind, beim vorliegenden Ausführungsbeispiel, drei verschiedene Modi vorgesehen, um dem Anwender/Installateur manuelle Beeinflussungsmöglichkeiten (Handbedienung) an den Aktoren A1 bis An zu ermöglichen. Zum Ersten ist dies ein sogenannter Gruppenhandbedienmodus, zum Zweiten ist dies ein sogenannter temporärer Handbedienmodus und zum Dritten ist dies ein sogenannter permanenter Handbedienmodus.

Ohne den Gedanken der Erfindung zu verlassen, besteht bei einem derartig ausgeführten elektrischen/elektronischen Installationssystem zum Beispiel aus Kostengründen vorteilhafterweise die Möglichkeit, nur einen einzigen Aktor, zum Beispiel den Aktor A1 mit ersten Betätigungselementen BE1 bis BE4 auszurüsten und bei den übrigen Aktoren, zum Beispiel bei den Aktoren A2 bis An, die ersten Betätigungselemente BE1 bis BE4 wegzulassen (einzusparen). Beispielhafterweise erfolgt die Bedienung der Aktoren A2 bis An dann vorteilhafterweise über die Betätigungselemente BE1 bis BE4 des Aktors A1.

Wie bereits beschrieben, sind aus dem Stand der Technik bereits umfangreiche elektrische/elektronische Installationssysteme für Gebäude bekannt, bei welchen in einem Schaltschrank eine Vielzahl von Aktoren A1 bis An angeordnet sind. Sollen bei einem derartigen Stand der Technik zum Beispiel mehrere Aktoren A1 bis An in einen Modus gebracht werden, welche dem Anwender/Installateur eine manuelle Beeinflussungsmöglichkeit (Handbedienung) ermöglicht, muss an jedem der Vielzahl von Aktoren A1 bis An zum Beispiel eines der ersten Betätigungselemente BE1 bis BE4 mit einer Betätigungsdauer von zum Beispiel fünf Sekunden betätigt werden. Dies gestaltet sich für den Anwender/Installateur entsprechend umständlich, weil eine Vielzahl von Betätigungsvorgängen durchgeführt werden muss. Gleiches gilt, wenn die manuelle Beeinflussungsmöglichkeit (Handbedienung) an den Aktoren A1 bis An wieder deaktiviert werden soll.

Durch ein vorstehend beschrieben ausgeführtes elektrisches/elektronisches Installationssystem ist dies für den Anwender/Installateur deutlich vereinfacht, weil durch einen einzigen Betätigungsvorgang an einem einzigen der Aktoren A1 bis An die manuelle Beeinflussungsmöglichkeit (Handbedienung) aktivierbar oder deaktivierbar ist.

Wird beim vorliegenden Ausführungsbeispiel der Gruppenhandbedienmodus aktiviert, erfolgt dies beispielsweise durch einen Betätigungsvorgang an einem der ersten Betätigungselemente BE1 bis BE4, beispielsweise an dem ersten Betätigungselement BE2, durch eine beispielsweise fünf Sekunden andauernde Betätigung, beispielsweise am Aktor A1, und eine entsprechende Auswertung des Betätigungsvorganges durch die Betätigungselementeauswertestufe BS. Durch diesen Betätigungsvorgang wird auch bei allen Aktoren A2 bis An, die dieser definierten Aktorengruppe zugehörig sind, die manuelle Beeinflussungsmöglichkeit (Handbedienung) aktiviert. Dies geschieht mittels eines Steuerbefehls, welcher über das Bussystem BUS an die Logikeinheiten L der Aktoren A2 bis An weitergeleitet wird. Dieser Steuerbefehl beinhaltet die Information, an welchen der Aktoren - im vorliegenden Fall am Aktor A1 - die manuelle Beeinflussungsmöglichkeit (Handbedienung) aktiviert wurde. Dieser Aktor - im vorliegenden Fall der Aktor A1 - wird mittels einer Auswahlmarkierung (Token) gekennzeichnet. Diese Auswahlmarkierung (Token) dient dazu, denjenigen Aktor - im vorliegenden Fall den Aktor A1 - auszuwählen, damit nur über diesen mittels seiner ersten Betätigungselemente BE1 bis BE4 die manuelle Beeinflussung der angeschlossenen Lasten LA erfolgen kann. Damit der Anwender/Installateur einen optischen Hinweis erhält, welcher der Aktoren - im vorliegenden Fall der Aktor 1 - zu diesem Zweck ausgewählt wurde, wird das dem ersten Lastausgang L1 beziehungsweise dem ersten Kanal zugehörige Anzeigeelement AE1 durch die Anzeigeelementeaktivierungsstufe AS in einen Blinkmodus versetzt.

Über den Aktor - im vorliegenden Fall über den Aktor A1 - können, wie auch bei einem permanenten Handbedienmodus, die angeschlossenen Lasten LA durch einen entsprechenden Betätigungsvorgang, zum Beispiel am ersten Betätigungslement BE3 oder am ersten Betätigungselement BE4, mittels eines kurzzeitigen Betätigungsvorganges (kleiner einer Sekunde) und entsprechender Auswertung durch die Betätigungselementeauswertestufe BS manuell beeinflusst werden. Des Weiteren besteht die Möglichkeit, durch eine entsprechende Betätigung beziehungsweise einen entsprechenden Betätigungsvorgang der ersten Betätigungselemente BE1 bis BE4 Steuerbefehle abzusetzen, durch welche übergreifende Funktionen an den weiteren Aktoren - im vorliegenden Fall an den Aktoren A2 bis An - zur Beeinflussung von angeschlossenen Lasten LA ausgelöst werden.

Der Gruppenhandbedienmodus und der permanente Handbedienmodus unterscheiden sich funktional erst, wenn alle Lastausgänge L1 bis Ln beziehungsweise Kanäle aller Aktoren A1 bis An einmal ausgewählt wurden. Beim permanenten Handbedienmodus wird nach dem Auswählen des letzten Lastausganges Ln des letzten Aktors An wieder auf den ersten Lastausgang L1 des ersten Aktors A1 zurückgeschaltet, um dort die manuelle Beeinflussungsmöglichkeit (Handbedienung) erneut zu starten. Eine optische Anzeige des ausgewählten Lastausganges L1 bis Ln erfolgt durch das Versetzen des zugehörigen Anzeigeelementes AE1 bis AEn in den Blinkmodus. Die manuelle Beeinflussung der angeschlossenen Lasten LA erfolgt jedoch immer durch die ersten Betätigungselemente BE1 bis BE4 des Aktors - im vorliegenden Fall des Aktors A1 - an dem die manuelle Beeinflussungsmöglichkeit aktiviert wurde.

Beim Gruppenhandbedienmodus wird jedoch die Auswahlmarkierung (Token) an den nächsten Aktor der betreffenden Aktorengruppe - im vorliegenden Fall vom Aktor A1 an den Aktor A2 - dann an den Aktor A3 bis letztendlich an den Aktor An weitergegeben. Bei dem Aktor, der die Auswahlmarkierung (Token) weitergegeben hat - im vorliegenden Fall bei dem Aktor A1 - blinkt nun keines der Anzeigeelemente AE1 bis AEn mehr, weil keiner der Lastausgänge L1 bis Ln mehr angewählt ist. Bei dem Aktor, welcher die Auswahlmarkierung (Token) erhalten hat - im vorliegenden Fall bei einem der Aktoren A2 bis An - wird das dem ersten Lastausgang L1 zugehörige Anzeigeelement AE1 mittels der Anzeigeelementeaktivierungsstufe AS in einen Blinkmodus versetzt. Die an den entsprechenden Aktoren A1 bis An angeschlossenen Lasten LA können nun durch die ersten Betätigungselemente BE1 bis BE4 des ersten Aktors A1 manuell beeinflusst werden, weil im vorliegenden Fall am Aktor A1 die manuelle Beeinflussungsmöglichkeit (Handbedienung) aktiviert wurde. Die Steuerung kann dabei über zwei Arten erfolgen. Der Aktor, im vorliegenden Fall der Aktor A1, der den Token erhält, kann über die ersten Betätigungselemente BE1 bis BE4 des ersten Aktors oder über die ersten Betätigungselemente BE1 bis BE4 des zweiten Aktors, gesteuert werden. Der jeweilige Aktor, im vorliegenden Fall der Aktor A1 oder der Aktor A2, erzeugt mittels seiner Logikeinheit L entsprechende Steuersignale und sendet diese auch über das Bussystem BUS.

Der temporäre Handbedienmodus wird im vorliegenden Fall durch eine kurzzeitige Betätigung (kleiner einer Sekunde) des ersten Betätigungselementes BE1 aktiviert. Eine Deaktivierung des temporären Handbedienmodus erfolgt automatisch, nämlich, wenn durch die Logikeinheit L festgestellt wird, dass, beispielsweise länger als zehn Sekunden, keine Betätigung an den ersten Betätigungselementen BE1 bis BE4 einer der Aktoren A1 bis An erfolgte.

Der permanente Handbedienmodus wird im vorliegenden Fall durch eine langzeitige Betätigung, zum Beispiel von fünf Sekunden, des ersten Betätigungselementes BE1 aktiviert. Eine Deaktivierung des permanenten Handbedienmodus wird durch eine nochmalige, zum Beispiel ebenfalls fünf Sekunden andauernde Betätigung des ersten Betätigungselementes BE1 vorgenommen.

Im vorliegenden Fall wird, nachdem der letzte Lastausgang Ln des letzten Aktors An ausgewählt wurde, durch einen Betätigungsvorgang mit kurzer Betätigungsdauer (kleiner einer Sekunde) am ersten Betätigungselement BE1 die Aktivierung der manuellen Beeinflussungsmöglichkeit (Handbedienung) am letzten Aktor An beendet und die manuelle Beeinflussungsmöglichkeit (Handbedienung) des ersten Lastausganges L1 am ersten Aktor A1 wieder aktiviert.

Die Erfindung ist anhand eines Ausführungsbeispiels beschrieben worden. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen näher erläutert werden müssen.

### Bezugszeichenliste

- A1 bis An: Aktoren
- AE1 bis AEn: Anzeigeelemente
- AED: Dritte Anzeigeelemente
- AEZ: Zweites Anzeigeelement
- AS: Anzeigeelementeaktivierungsstufe
- BE1 bis BE4: Erste Betätigungselemente
- BEZ: Zweites Betätigungselement
- BS: Betätigungselementeauswertestufe
- BUS: Bussystem
- HA: Handbedienaktivierungssstufe
- L: Logikeinheit
- LA: Lasten
- LED: Leuchtdiode
- L1 bis Ln: Lastausgänge
- MC: Mikrocontroller
- S1: Erste Schnittstelle

## Patentansprüche

1. Elektrisches/elektronisches Installationssystem für Gebäude mit zumindest zwei über ein Bussystem (BUS) miteinander in Verbindung stehenden, jeweils als Reiheneinbaugerät ausgeführten Aktoren (A1 bis An), welche jeweils mehrere Lastausgänge (L1 bis Ln) aufweisen, die zur Beeinflussung von angeschlossenen Lasten (LA) vorgesehen sind, wobei jedem Lastausgang (L1 bis Ln) zumindest ein Anzeigeelement (AE1 bis AEn) zugeordnet ist, und welche Aktoren (A1 bis An) jeweils mehrere erste Betätigungselemente (BE1 bis BE4) aufweisen, die zur bedarfsweisen, manuellen Beeinflussung der angeschlossenen Lasten (LA) vorgesehen sind, und wobei zumindest ein zweites Betätigungselement (BEZ) vorgesehen ist, welches zur Programmierung dient, **dadurch gekennzeichnet, dass** ausgelöst durch eine entsprechende Betätigung eines der ersten Betätigungselemente (BE1 bis BE4) über die Logikeinheit (L) eines jeden Aktors (A1 bis An) jeweils die manuelle Beeinflussungsmöglichkeit (Handbedienung) der durch die Betätigung definierten Aktorengruppe (A1 bis An) aktiviert wird, wobei die Aktorengruppe (A1 bis An) durch eine Auswahlmarkierung (Token) gekennzeichnet wird, und dass die Logikeinheit (L) eines jeden Aktors der Aktorengruppe (A1 bis An) datentechnisch über das Bussystem (BUS) miteinander in Verbindung stehen, und dass die Logikeinheit (L) eines jeden Aktors der Aktorengruppe (A1 bis An) eine Betätigungselementeauswertestufe (BS) und eine Handbedienaktivierungsstufe (HA) aufweist, so dass die an die Aktorengruppe (A1 bis An) angeschlossenen Lasten (LA) durch die ersten Betätigungselemente (BE1 bis BE4) eines ersten Aktors der Aktorengruppe (A1 bis An) beeinflusst werden.

2. Elektrisches/elektronisches Installationssystem nach Anspruch 1, **dadurch gekennzeichnet, dass** demjenigen Aktor der Aktorengruppe (A1 bis An), an dem die Aktivierung der manuellen Beeinflussungsmöglichkeit (Handbedienung) erfolgte, über die Logikeinheit (L) die übrigen Aktoren der Aktorengruppe (A1 bis An) in einer logischen Reihenfolge zugeordnet werden, und dass zumindest an dem Aktor der Aktorengruppe (A1 bis An), an dem die Aktivierung der manuellen Beeinflussungsmöglichkeit (Handbedienung) erfolgte, eine entsprechende Kennzeichnung durch Ansteuerung zumindest eines Anzeigeelementes (AE1 bis AEn) und/oder eines dritten Anzeigeelementes (AED) vorgenommen wird.

3. Elektrisches/elektronisches Installationssystem nach Anspruch 1 oder 2,
**dadurch gekennzeichnet, dass** mittels einer ausgewählten Logikeinheit (L) eine Durchnummerierung der Aktoren (A1 bis An) der Aktorengruppe vorgenommen wird, um die logische Reihenfolge zu erzeugen.

4. Elektrisches/elektronisches Installationssystem nach einem der Ansprüche 1 bis 3, **dadurch gekennzeichnet, dass** dem gekennzeichneten Aktor (A1 bis An) über seine Logikeinheit (L) die übrigen Aktoren der Aktorengruppe (A1 bis An) in einer logischen Reihenfolge mittels Durchnummerierung zuzuordnen sind.

5. Elektrisches/elektronisches Installationssystem nach einem der Ansprüche 1 bis 4, **dadurch gekennzeichnet, dass** mittels der ersten Betätigungselemente (BE1 bis BE4) desjenigen Aktors der Aktorengruppe (A1 bis An), an dem die Aktivierung der manuellen Beeinflussungsmöglichkeit (Handbedienung) erfolgte, über die Logikeinheit (L) eine manuelle Beeinflussungsmöglichkeit (Handbedienung) der Lastausgänge (L1 bis Ln) der übrigen Aktoren der Aktorengruppe (A1 bis An) auswählbar ist.

6. Elektrisches/elektronisches Installationssystem nach einem der Ansprüche 1 bis 5 **dadurch gekennzeichnet, dass** zumindest zwei erste Betätigungselemente (BE1 bis BE4) eines jeden Aktors der Aktorengruppe (A1 bis An) zu einer Betätigungselementengruppe zusammengefasst sind.

7. Elektrisches/elektronisches Installationssystem nach einem der Ansprüche 1 bis 6, **dadurch gekennzeichnet, dass** zumindest zwei Anzeigeelemente (AE1 bis AEn) eines jeden Aktors der Aktorengruppe (A1 bis An) zu einer Anzeigeeinheit zusammengefasst und über eine Anzeigeelementeaktivierungsstufe (AS) ansteuerbar sind.

8. Elektrisches/elektronisches Installationssystem nach einem der Ansprüche 1 bis 7 **dadurch gekennzeichnet, dass** zumindest ein Anzeigeelement (AE1 bis AEn) und/oder ein zweites Anzeigeelement (AEZ) und/oder ein drittes Anzeigeelement (AED) als Leuchtdiode (LED) ausgeführt ist.

9. Elektrisches/elektronisches Installationssystem nach einem der Ansprüche 1 bis 8, **dadurch gekennzeichnet, dass** jeder Aktor der Aktorengruppe (A1 bis An) zumindest zwei Lastausgänge (L1 bis Ln) aufweist, und dass jedem Lastausgang (L1 bis Ln) zumindest ein Anzeigeelement (AE1 bis AEn) zugeordnet ist.

10. Elektrisches/elektronisches Installationssystem nach einem der Ansprüche 1 bis 9, **dadurch gekennzeichnet, dass** zumindest einem zweiten Bedienelement (BEZ) zumindest ein zweites Anzeigeelement (AEZ) zugeordnet ist.

11. Elektrisches/elektronisches Installationssystem nach einem der Ansprüche 1 bis 10, **dadurch gekennzeichnet, dass** zumindest ein, über zumindest eine erste Schnittstelle (S1) anschließbares Bussystem (BUS) als KNX-Bussystem ausgeführt ist.

12. Elektrisches/elektronisches Installationssystem nach einem der Ansprüche 1 bis 11, **dadurch gekennzeichnet, dass** zumindest ein über zumindest eine erste Schnittstelle (S1) anschließbares Bussystem (BUS) als DALI-Bussystem ausgeführt ist.

13. Elektrisches/elektronisches Installationssystem nach einem der Ansprüche 1 bis 12, **dadurch gekennzeichnet, dass** zumindest einer der Aktoren der Aktorengruppe (A1 bis An) eine weitere Schnittstelle zum Anschluss eines weiteren Bussystems aufweist.

14. Elektrisches/elektronisches Installationssystem nach einem der Ansprüche 1 bis 13, **dadurch gekennzeichnet, dass** ein zweites Betätigungselement (BEZ) eines jeden Aktors der Aktorengruppe (A1 bis An) zur Betätigung eines Programmierschalters vorgesehen ist, welchem ein als Programmier-LED ausgeführtes zweites Anzeigeelement (AEZ) zugeordnet ist.

15. Elektrisches/elektronisches Installationssystem nach einem der Ansprüche 1 bis 14, **dadurch gekennzeichnet, dass** zumindest einem der Betätigungselemente (BE1 bis BE4) zumindest ein als LED ausgeführtes drittes Anzeigeelement (AED) zugeordnet ist.

16. Elektrisches/elektronisches Installationssystem nach einem der Ansprüche 1 bis 15, **dadurch gekennzeichnet, dass** die Logikeinheit (L) eines jeden Aktors der Aktorengruppe (A1 bis An) zumindest einen Mikrocontroller (MC) aufweist.

17. Elektrisches/elektronisches Installationssystem nach einem der Ansprüche 1 bis 16, **dadurch gekennzeichnet, dass** zur manuellen Beeinflussung der Aktoren der Aktorengruppe (A1 bis An) ein Gruppenhandbedienmodus vorgesehen ist, wobei zur Vervollständigung der Programmierung des Modus der Token an den nächsten Aktor der Aktorengruppe (A1 bis An) weitergegeben wird.

18. Elektrisches/elektronisches Installationssystem nach einem der Ansprüche 1 bis 17, **dadurch gekennzeichnet, dass** zur manuellen Beeinflussung der Aktoren der Aktorengruppe (A1 bis An) ein temporärer Handbedienmodus vorgesehen ist.

19. Elektrisches/elektronisches Installationssystem nach einem der Ansprüche 1 bis 18, **dadurch gekennzeichnet, dass** zur manuellen Beeinflussung der Aktoren der Aktorengruppe (A1 bis An) ein permanenter Handbedienmodus vorgesehen ist.

## Claims

1. Electrical/electronic installation system for buildings having at least two actuators (A1 to An) which are connected to one another via a bus system (BUS), are each designed as a series installation device and each have a plurality of load outputs (L1 to Ln) which are provided for influencing connected loads (LA), each load output (L1 to Ln) being assigned at least one display element (AE1 to AEn), and which actuators (A1 to An) each have a plurality of first actuating elements (BE1 to BE4) which are provided for manually influencing the connected loads (LA) as required, and at least one second actuating element (BEZ) being provided which is used for programming, **characterized in that** triggered by a corresponding actuation of one of the first actuating elements (BE1 to BE4) via the logic unit (L) of each actuator (A1 to An), in each case the manual influencing option (manual operation) of the actuator group (A1 to An) defined by the actuation is activated, the actuator group (A1 to An) being identified by a selection marking (token), and **in that** the logic unit (L) of each actuator of the actuator group (A1 to An) is connected to one another in terms of data technology via the bus system (BUS), and **in that** the logic unit (L) of each actuator of the actuator group (A1 to An) has an actuating element evaluation stage (BS) and a manual control activation stage (HA), so that the loads (LA) connected to the actuator group (A1 to An) are influenced by the first actuating elements (BE1 to BE4) of a first actuator of the actuator group (A1 to An).

2. Electrical/electronic installation system according to claim 1, **characterised in that** the other actuators of the actuator group (A1 to An) are assigned in a logical sequence via the logic unit (L) to the actuator of the actuator group (A1 to An) at which the activation of the manual influencing option (manual operation) took place, and **in that** at least at the actuator of the actuator group (A1 to An) at which the activation of the manual influencing option (manual operation) took place, a corresponding identification is carried out by actuating at least one display element (AE1 to AEn) and/or a third display element (AED).

3. Electrical/electronic installation system according to claim 1 or 2, **characterised in that** a numbering of the actuators (A1 to An) of the actuator group is carried out by means of a selected logic unit (L) in order to generate the logical sequence.

4. Electrical/electronic installation system according to any of claims 1 to 3, **characterised in that** the other actuators of the actuator group (A1 to An) are to be assigned to the identified actuator (A1 to An) via its logic unit (L) in a logical sequence by means of numbering.

5. Electrical/electronic installation system according to any of claims 1 to 4, **characterised in that,** by means of the first actuating elements (BE1 to BE4) of that actuator of the actuator group (A1 to An) at which the activation of the manual influencing option (manual operation) took place, a manual influencing option (manual operation) of the load outputs (L1 to Ln) of the remaining actuators of the actuator group (A1 to An) can be selected via the logic unit (L).

6. Electrical/electronic installation system according to any of claims 1 to 5, **characterized in that** at least two first actuating elements (BE1 to BE4) of each actuator of the actuator group (A1 to An) are combined to form an actuating element group.

7. Electrical/electronic installation system according to any of claims 1 to 6, **characterised in that** at least two display elements (AE1 to AEn) of each actuator of the actuator group (A1 to An) are combined to form a display unit and can be controlled via a display element activation stage (AS).

8. Electrical/electronic installation system according to any of claims 1 to 7, **characterised in that** at least one display element (AE1 to AEn) and/or a second display element (AEZ) and/or a third display element (AED) is designed as a light-emitting diode (LED).

9. Electrical/electronic installation system according to any of claims 1 to 8, **characterised in that** each actuator of the actuator group (A1 to An) has at least two load outputs (L1 to Ln), and **in that** at least one display element (AE1 to AEn) is assigned to each load output (L1 to Ln).

10. Electrical/electronic installation system according to any of claims 1 to 9, **characterised in that** at least one second display element (AEZ) is assigned to at least one second operating element (BEZ).

11. Electrical/electronic installation system according to any of claims 1 to 10, **characterised in that** at least one bus system (BUS) which can be connected via at least one first interface (S1) is designed as a KNX bus system.

12. Electrical/electronic installation system according to any of claims 1 to 11, **characterised in that** at least one bus system (BUS) connectable via at least one first interface (S1) is designed as a DALI bus system.

13. Electrical/electronic installation system according to any of claims 1 to 12, **characterised in that** at least one of the actuators of the actuator group (A1 to An) has a further interface for connecting a further bus system.

14. Electrical/electronic installation system according to any of claims 1 to 13, **characterised in that** a second actuating element (BEZ) of each actuator of the actuator group (A1 to An) is provided for actuating a programming switch, to which a second display element (AEZ) designed as a programming LED is assigned.

15. Electrical/electronic installation system according to any of claims 1 to 14, **characterised in that** at least one third display element (AED) designed as an LED is assigned to at least one of the actuating elements (BE1 to BE4).

16. Electrical/electronic installation system according to any of claims 1 to 15, **characterised in that** the logic unit (L) of each actuator of the actuator group (A1 to An) comprises at least one microcontroller (MC).

17. Electrical/electronic installation system according to any of claims 1 to 16, **characterised in that** a group manual operation mode is provided for manually influencing the actuators of the actuator group (A1 to An), wherein the token is passed to the next actuator of the actuator group (A1 to An) to complete the programming of the mode.

18. Electrical/electronic installation system according to any of claims 1 to 17, **characterised in that** a temporary manual operation mode is provided for manually influencing the actuators of the actuator group (A1 to An).

19. Electrical/electronic installation system according to any of claims 1 to 18, **characterised in that** a permanent manual operation mode is provided for manually influencing the actuators of the actuator group (A1 to An).

## Revendications

1. Système d'installation électrique/électronique pour bâtiments avec au moins deux actionneurs (A1 à An) reliés entre eux par un système de bus (BUS) et réalisés chacun sous forme d'appareil encastré en série, qui présentent chacun plusieurs sorties de charge (L1 à Ln) qui sont prévues pour influencer des charges (LA) raccordées, au moins un élément d'affichage (AE1 à AEn) étant associé à chaque sortie de charge (L1 à Ln), et lesquels actionneurs (A1 à An) présentent chacun plusieurs premiers éléments d'actionnement (BE1 à BE4) qui sont prévus pour influencer manuellement, en cas de besoin, les charges raccordées (LA), et au moins un deuxième élément d'actionnement (BEZ) étant prévu, lequel sert à la programmation, **caractérisé en ce que,** déclenchée par un actionnement correspondant de l'un des premiers éléments d'actionnement (BE1 à BE4), la possibilité d'influence manuelle (commande manuelle) du groupe d'actionneurs (A1 à An) défini par l'actionnement est respectivement activée par l'intermédiaire de l'unité logique (L) de chaque actionneur (A1 à An), le groupe d'actionneurs (A1 à An) étant **caractérisé par** un marquage de sélection (token), et **en ce que** l'unité logique (L) de chaque actionneur du groupe d'actionneurs (A1 à An) est en liaison technique de données entre eux par l'intermédiaire du système de bus (BUS), et **en ce que** l'unité logique (L) de chaque actionneur du groupe d'actionneurs (A1 à An) présente un niveau d'évaluation d'élément d'actionnement (BS) et un niveau d'activation de commande manuelle (HA), de sorte que les charges (LA) raccordées au groupe d'actionneurs (A1 à An) sont influencées par les premiers éléments d'actionnement (BE1 à BE4) d'un premier actionneur du groupe d'actionneurs (A1 à An).

2. Système d'installation électrique/électronique selon la revendication 1, **caractérisé en ce que** les autres actionneurs du groupe d'actionneurs (A1 à An) sont associés dans un ordre logique, par l'intermédiaire de l'unité logique (L), à l'actionneur du groupe d'actionneurs (A1 à An) sur lequel l'activation de la possibilité d'influence manuelle (commande manuelle) a eu lieu, et **en ce qu'**au moins sur l'actionneur du groupe d'actionneurs (A1 à An) sur lequel a eu lieu l'activation de la possibilité d'influence manuelle (commande manuelle), une caractérisation correspondante est effectuée par la commande d'au moins un élément d'affichage (AE1 à AEn) et/ou d'un troisième élément d'affichage (AED).

3. Système d'installation électrique/électronique selon la revendication 1 ou 2, **caractérisé en ce que,** au moyen d'une unité logique sélectionnée (L), une numérotation consécutive des actionneurs (A1 à An) du groupe d'actionneurs est effectuée afin de générer la séquence logique.

4. Système d'installation électrique/électronique selon l'une des revendications 1 à 3, **caractérisé en ce que** les autres actionneurs du groupe d'actionneurs (A1 à An) peuvent être affectés à l'actionneur caractérisé (A1 à An) par l'intermédiaire de son unité logique (L) dans un ordre logique au moyen d'une numérotation continue.

5. Système d'installation électrique/électronique selon l'une des revendications 1 à 4, **caractérisé en ce qu'**au moyen des premiers éléments d'actionnement (BE1 à BE4) de l'actionneur du groupe d'actionneurs (A1 à An), sur lequel l'activation de la possibilité d'influence manuelle (commande manuelle) a eu lieu, une possibilité d'influence manuelle (commande manuelle) des sorties de charge (L1 à Ln) des autres actionneurs du groupe d'actionneurs (A1 à An) peut être sélectionnée via l'unité logique (L).

6. Système d'installation électrique/électronique selon l'une des revendications 1 à 5, **caractérisé en ce qu'**au moins deux premiers éléments d'actionnement (BE1 à BE4) de chaque actionneur du groupe d'actionneurs (A1 à An) sont réunis en un groupe d'éléments d'actionnement.

7. Système d'installation électrique/électronique selon l'une des revendications 1 à 6, **caractérisé en ce qu'**au moins deux éléments d'affichage (AE1 à AEn) de chaque actionneur du groupe d'actionneurs (A1 à An) sont réunis en une unité d'affichage et peuvent être commandés par l'intermédiaire d'un niveau d'activation des éléments d'affichage (AS).

8. Système d'installation électrique/électronique selon l'une des revendications 1 à 7, **caractérisé en ce qu'**au moins un élément d'affichage (AE1 à AEn) et/ou un deuxième élément d'affichage (AEZ) et/ou un troisième élément d'affichage (AED) est réalisé sous forme de diode électroluminescente (LED).

9. Système d'installation électrique/électronique selon l'une des revendications 1 à 8, **caractérisé en ce que** chaque actionneur du groupe d'actionneurs (A1 à An) comporte au moins deux sorties de charge (L1 à Ln), et **en ce qu'**à chaque sortie de charge (L1 à Ln) est associé au moins un élément d'affichage (AE1 à AEn).

10. Système d'installation électrique/électronique selon l'une des revendications 1 à 9, **caractérisé en ce qu'**au moins un deuxième élément de commande (BEZ) est associé à au moins un deuxième élément d'affichage (AEZ).

11. Système d'installation électrique/électronique selon l'une des revendications 1 à 10, **caractérisé en ce qu'**au moins un système de bus (BUS) pouvant être raccordé par l'intermédiaire d'au moins une première interface (S1) est réalisé sous la forme d'un système de bus KNX.

12. Système d'installation électrique/électronique selon l'une des revendications 1 à 11, **caractérisé en ce qu'**au moins un système de bus (BUS) pouvant être raccordé par l'intermédiaire d'au moins une première interface (S1) est conçu comme un système de bus DALI.

13. Système d'installation électrique/électronique selon l'une des revendications 1 à 12, **caractérisé en ce qu'**au moins l'un des actionneurs du groupe d'actionneurs (A1 à An) présente une autre interface pour le raccordement d'un autre système de bus.

14. Système d'installation électrique/électronique selon l'une des revendications 1 à 13, **caractérisé en ce qu'**un deuxième élément d'actionnement (BEZ) de chaque actionneur du groupe d'actionneurs (A1 à An) est prévu pour actionner un commutateur de programmation auquel est associé un deuxième élément d'affichage (AEZ) réalisé sous la forme d'une LED de programmation.

15. Système d'installation électrique/électronique selon l'une des revendications 1 à 14, **caractérisé en ce qu'**au moins un troisième élément d'affichage (AED) réalisé sous forme de LED est associé à au moins l'un des éléments d'actionnement (BE1 à BE4).

16. Système d'installation électrique/électronique selon l'une des revendications 1 à 15, **caractérisé en ce que** l'unité logique (L) de chaque actionneur du groupe d'actionneurs (A1 à An) comprend au moins un microcontrôleur (MC).

17. Système d'installation électrique/électronique selon l'une des revendications 1 à 16, **caractérisé en ce qu'**un mode de commande manuelle de groupe est prévu pour influencer manuellement les actionneurs du groupe d'actionneurs (A1 à An), le token étant transmis à l'actionneur suivant du groupe d'actionneurs (A1 à An) pour compléter la programmation du mode.

18. Système d'installation électrique/électronique selon l'une des revendications 1 à 17, **caractérisé en ce qu'**un mode de commande manuelle temporaire est prévu pour influencer manuellement les actionneurs du groupe d'actionneurs (A1 à An).

19. Système d'installation électrique/électronique selon l'une des revendications 1 à 18, **caractérisé en ce qu'**un mode de commande manuelle permanent est prévu pour influencer manuellement les actionneurs du groupe d'actionneurs (A1 à An).
